# EUROPÄISCHE PATENTSCHRIFT

(11) **EP 4 449 063 B1**
(45) Veröffentlichungstag und Bekanntmachung des Hinweises auf die Patenterteilung: **17.06.2026**
(21) Anmeldenummer: 22835225.8
(22) Anmeldetag: 07.12.2022
(51) Int. Cl.: G01F 1/58

(54) **MAGNETISCH-INDUKTIVE DURCHFLUSSMESSSONDE**
MAGNETIC-INDUCTIVE FLOW PROBE
SONDE DE MESURE DE DÉBIT MAGNÉTO-INDUCTIF

(30) Priorität: 16.12.2021 DE 102021133548
(43) Veröffentlichungstag der Anmeldung: 23.10.2024
(73) Patentinhaber: Endress+Hauser Flowtec AG, 4153 Reinach (CH)
(72) Erfinder: TSCHUDIN, Beat, 4153 Reinach (CH); STEINER, Fabian, 5035 Unterentfelden (CH); STOOSS, Philipp, 4457 Diegten (CH)
(74) Vertreter: Endress + Hauser Group Services (Deutschland) AG+Co. KG
(86) Internationale Anmeldenummer: PCT/EP2022/084826
(87) Internationale Veröffentlichungsnummer: WO 2023/110586

(56) Entgegenhaltungen:
- EP-A1- 0 534 003
- WO-A1-2021/224035
- DE-A1- 102019 126 709
- DE-A1- 102019 131 671

## Beschreibung

Die Erfindung betrifft eine magnetisch-induktive Durchflussmesssonde zum Einsetzen in eine Öffnung einer von einem fließfähigen Medium durchströmten Rohrleitung und zum Ermitteln einer strömungsgeschwindigkeitsabhängigen Messgröße eines fließfähigen Mediums.

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung die Durchflussgeschwindigkeit und, mit Hinzunahme eines bekannten Rohrquerschnitts, der Volumendurchfluss ermittelt werden.

Im Gegensatz zu einem magnetisch-induktiven Durchflussmessgerät, welches ein Messrohr zum Führen des Mediums mit angebrachter Vorrichtung zum Erzeugen eines das Messrohr durchdringenden Magnetfeldes und Messelektroden umfasst, werden magnetisch-induktive Durchflussmesssonden mit ihrer die Messelektroden und die magnetfelderzeugende Vorrichtung umschließende metallische Hülse in eine seitliche Öffnung einer Rohrleitung eingeführt und fluiddicht fixiert. Ein Messrohr ist nicht mehr notwendig. Die eingangs erwähnten Messelektroden und Vorrichtung zum Erzeugen des das Messrohr durchdringenden Magnetfeldes auf der Mantelfläche des Messrohres entfällt, und wird durch ein im Inneren der Hülse und in unmittelbarer Nähe zu den Messelektroden angeordnete Vorrichtung zur Erzeugung des Magnetfeldes ersetzt, welche so ausgestaltet ist, dass eine Symmetrieachse der Magnetfeldlinien des erzeugten Magnetfeldes die Frontfläche bzw. die Fläche zwischen den Messelektroden senkrecht schneidet. Im Stand der Technik gibt es bereits eine Vielzahl an unterschiedlichen magnetisch-induktiven Durchflussmesssonden. Die EP 0 892 251 A1 beispielsweise lehrt eine magnetisch-induktive Durchflussmesssonde mit einer das Gehäuse endseitig abschließenden Frontplatte - welche als Kugelkalotte ausgebildet ist - und eine im Gehäuse angeordnete Vorrichtung zum Erzeugen eines die Frontplatte durchsetzenden Magnetfeldes. Die Vorrichtung umfasst eine Spule, die auf einen zylindrischen Spulenkern aufgeschoben ist, welcher als Spulenträger fungiert und Feldrückführungskörper. Zwei stiftförmige Messelektroden sind in der Frontplatte befestigt und werden durch die Vorrichtung zum Erzeugen des Magnetfeldes in Längsrichtung des Gehäuses verdeckt. Magnetisch-induktive Durchflussmesssonden weisen in der Regel zusätzlich zur Hülse ein aus Kunststoff gebildetes Gehäuse auf, in dem die Elektronikkomponenten zum Betreiben der magnetisch-induktiven Durchflussmesssonde angeordnet sind. Das Gehäuse wird üblicherweise über eine Bajonette-, Schraub-, Press- und/oder Klemmverbindung mit der Hülse verbunden. Die WO 2021/224035 A1 offenbart eine weitere magnetisch-induktive Durchflussmesssonde des Standes der Technik.

Der Erfindung liegt die Aufgabe zugrunde eine alternative belastbare Verbindung zwischen dem Gehäuse und der mediumsberührenden Hülse bereitzustellen.

Die Aufgabe wird gelöst durch die magnetisch-induktive Durchflussmesssonde nach Anspruch 1.

Das erfindungsgemäße magnetisch-induktive Durchflussmesssonde zum Einsetzen in eine Öffnung eines von einem fließfähigen Medium durchströmten Behältnisses und zum Ermitteln einer strömungsgeschwindigkeitsabhängigen Messgröße eines fließfähigen Mediums umfasst:
- eine metallische Hülse mit einen ersten Hülsenendabschnitt und einen mediumsberührenden zweiten Hülsenendabschnitt,
   wobei die Hülse im ersten Hülsenendabschnitt mindestens eine Hülsenöffnung in einer Hülsenwandung aufweist;
- mindestens zwei Messelektroden zum Bilden eines galvanischen Kontaktes mit dem Medium und zum Abgreifen einer induzierten Spannung im fließenden Medium,
   wobei mindestens eine der mindestens zwei Messelektroden im zweiten Hülsenendabschnitt angeordnet ist;
- eine magnetfelderzeugende Vorrichtung zum Erzeugen eines zumindest den zweiten Hülsenendabschnitt durchdringenden Magnetfeldes,
   wobei die magnetfelderzeugende Vorrichtung zumindest abschnittsweise in einem Hülseninneren angeordnet ist;
- ein Gehäuse zum Unterbringen von Elektronikkomponenten,
   wobei das Gehäuse einen zumindest teilweise aus thermoplastischen Kunststoff gebildeten Gehäusekörper aufweist,
   wobei der Gehäusekörper eine Gehäusekörperöffnung aufweist, in die sich der erste Hülsenendabschnitt erstreckt,
   wobei der Gehäusekörper mindestens einen Vorsprung aufweist, der sich, insbesondere radial, in Richtung des Hülseninneren und in die mindestens eine Hülsenöffnung erstreckt zum Bilden einer formschlüssigen Verbindung zwischen der Hülse und dem Gehäusekörper.

Die mechanische Verbindung des Gehäuses mit der Hülse wird im ersten Hülsenendabschnitt realisiert. In diesem Bereich befindet sich auch die mindestens eine Hülsenöffnung - die beispielsweise als Durchgangsloch, ein Sackloch oder eine Einprägung ausgebildet sein kann - und der mindestens eine Vorsprung - der beispielsweise als Steg ausgebildet sein kann -, welcher sich in oder auch durch die Hülsenöffnung erstreckt. Wirkt eine Kraft auf die Hülse und/oder das Gehäuse, so nimmt der mindestens eine Vorsprung diese Kraft zumindest teilweise auf.

Eine nicht durch die vorliegenden Ansprüche gestützte Messanordnung in einer Prozessanlage kann umfassen:
- ein Behältnis, insbesondere eine Rohrleitung, zum Führen eines Mediums mit einer Öffnung in einer Mantelfläche;
- eine erfindungsgemäße magnetisch-induktive Durchflussmesssonde, welche in der Öffnung angeordnet ist.

Vorteilhafte Ausgestaltung der Erfindung sind Gegenstand der Unteransprüche.

Eine Ausgestaltung sieht vor, dass der Gehäusekörper ein Polycarbonat umfasst.

Eine Ausgestaltung sieht vor, dass das Gehäuse ein Dichtmittel, insbesondere einen Dichtring, umfasst,
wobei das Dichtmittel, insbesondere der Dichtring, in einer Dichtmittelaufnahme des Gehäusekörpers angeordnet und zwischen einer Außenwandung der Hülse und einer Gegendruckfläche des Gehäusekörpers eingepresst ist.

Das Dichtmittel, insbesondere der Dichtring ist dazu eingerichtet, Fertigungstoleranzen der Hülse, des Gehäusekörpers und des Vorsprunges beim Herstellen der Verbindung aufzunehmen und den Bewegungsfreiraum zwischen Hülse und Gehäuse zu minimieren. Das Vorsehen des Dichtmittels ist weiterhin für die Haptik besonders vorteilhaft, da somit vermieden wird, dass sich beim Vorsprung ein Drehpunkt ausbildet, der dafür sorgt, dass die Hülse bereits bei geringsten Kräften in der Gehäusekörperöffnung wackelt.

Eine Ausgestaltung sieht vor, dass das Gehäuse eine Gehäusekappe umfasst, die dazu eingerichtet ist, das Dichtmittel, insbesondere den Dichtring, in Position zu halten,
wobei die Gehäusekappe die Dichtmittelaufnahme in einer Längsrichtung der Hülse begrenzt.

Vorteilhaft an der Ausgestaltung ist die abstützende Eigenschaft der Gehäusekappe, die verhindert, dass das Dichtmittel beim Vibrieren der Hülse bzw. der Messstelle oder Temperaturänderungen aus der Dichtmittelaufnahme herausrutscht.

Weiterhin vorteilhaft ist, dass mit der Ausgestaltung kein gesondert geformtes Dichtmittel notwendig ist, sondern ein O-Ring für eine ausreichende Kompensation der Toleranzen und Fixierung des Gehäuses an der Hülse genügt.

Eine Ausgestaltung sieht vor, dass die Gehäusekappe zumindest formschlüssig mit dem Gehäusekörper verbunden ist.

Vorteilhaft an der Ausgestaltung ist, dass durch die formschlüssige Verbindung keine dauerhafte Kraft auf den Gehäusekörper bzw. die Aufnahme für die Gehäusekappe wirkt, was ansonsten dazu führen würde, dass der Gehäusekörper an dieser Stelle schneller altert.

Eine Ausgestaltung sieht vor, dass das Gehäuse ein Gehäuseinneres aufweist,
wobei der Gehäusekörper einen Kragen aufweist, der sich zumindest abschnittsweise in das Gehäuseinnere erstreckt,
wobei der Kragen den mindestens einen Vorsprung umfasst.

Der mindestens eine Vorsprung kann mittels Heißverstemmen gebildet sein.

Heißverstemmen ist ein Fertigungserfahren zum Verbinden von zwei Bauteilen, dabei ist ein Bauteil aus Kunststoff und das andere Bauteil aus Metall. Dies erlaubt eine dauerhafte formschlüssige, kraftschlüssige und teilweise darüber hinaus auch stoffschlüssige Verbindung ohne zusätzlichen Reinigungsaufwand und damit eine hohe Designfreiheit in der Konzeption von Bauteilen.

Ein Vorteil des Heißverstemmens ist, dass damit Fertigungstoleranzen bei der Hülsenöffnung oder der Hülse selbst kompensiert werden können.

Eine Ausgestaltung sieht vor, dass der Vorsprung durch das Ausprägen einer Vertiefung in eine dem Innengehäuse zugeneigten Fläche des Kragens ausgebildet ist.

Eine Ausgestaltung sieht vor, dass der Vorsprung durch das Ausprägen einer Vertiefung in eine der Außenwandung der Hülse zugewandten Fläche des Kragens ausgebildet ist.

Die beiden vorweg aufgeführten Ausgestaltungen bilden zwei Alternativen für die Fertigung des mindestens einen Vorsprunges. In ersten genannten Fall werden wird über einen beheizten Stempel eine Vertiefung in die dem Innengehäuse zugeneigten Fläche des Kragens erzeugt. Durch das Aufschmelzen und das Verdrängen des Materials in Richtung des Hülseninneren, bildet sich durch die Hülsenöffnung ein Vorsprung aus, der die formschlüssige Verbindung erzeugt. Im zweiten Fall wird der Stempel in das Hülseninnere positioniert und durch die Hülsenöffnung geführt. Das Material des Gehäusekörpers quillt aus der der Außenwandung der Hülse zugewandten Fläche des Kragens radial in das Hülseninnere und bildet nach dem Ausstarren den Vorsprung, durch den die formschlüssige Verbindung gebildet wird.

Eine Ausgestaltung sieht vor, dass der Gehäusekörper, insbesondere der Kragen einen hervorkragenden Anschlagskörper aufweist
wobei die Hülse eine Aufnahme für den Anschlagskörper aufweist,
wobei der Anschlagskörper in der Aufnahme, insbesondere im Schlitz, angeordnet ist,
wobei der Anschlagskörper dazu eingerichtet ist, Scherkräfte auf den mindestens einen Vorsprung zu verringern, welche zumindest durch ein Drehmoment auf den Gehäusekörper verursacht sind.

Der Anschlagskörper dient dazu, die auf den mindestens einen Vorsprung wirkenden Scherkräfte - die beispielsweise dann auftreten, wenn eine Drehmoment auf den Gehäusekörper wirkt - zu verringern. Ist die Aufnahme als Schlitz ausgebildet, der sich parallel zur Längsachse der Hülse erstreckt, und der zumindest abschnittsweise quader- oder rhombusförmige Anschlagskörper in den Schlitz eingeführt, so nimmt dieser keine Kräfte in Längsrichtung auf. Kräfte in Längsrichtung werden in dem Fall zumindest durch den Vorsprung aufgenommen.

Eine Ausgestaltung sieht vor, dass die mindestens eine Hülsenöffnung zumindest abschnittsweise als Schlitz ausgebildet ist.

Eine Ausgestaltung sieht vor, dass der Schlitz in einem ersten Schlitz-Abschnitt einen ersten Schlitz-Durchmesser D1 annimmt,
wobei der Schlitz in einem zweiten Schlitz-Abschnitt einen zweiten Schlitz-Durchmesser D2 annimmt,
wobei der erste Schlitz-Durchmesser D1 kleiner ist als der zweite Schlitz-Durchmesser D2.

Eine Ausgestaltung sieht vor, dass sich der Schlitz von einem Hülsenrand der Hülse in Hülsen-Längsrichtung erstreckt,
wobei der Hülsenrand eine schräge Phase aufweist zur vereinfachten Einführung eines Teilabschnittes des Gehäusekörpers.

Eine Ausgestaltung sieht vor, dass die mindestens eine Hülsenöffnung zumindest abschnittsweise oval ausgebildet ist.

Eine Ausgestaltung sieht vor, dass der Gehäusekörper eine Führung aufweist, die sich zumindest abschnittsweise entlang des Schlitzes erstreckt zur Aufnahme eines auf den Gehäusekörper wirkenden Drehmoments.

Die Erfindung wird anhand der nachfolgenden Figuren näher erläutert. Es zeigt:
Fig. 1: eine teilweise geschnittene Darstellung einer magnetisch-induktiven Durchflussmesssonde;
Fig. 2: eine geschnittene Darstellung durch den Verbindungsteil des Gehäuses mit der Hülse;
Fig. 3a-c: drei Stufen eines Verfahrens zur Herstellung der erfindungsgemäßen magnetisch-induktiven Durchflussmesssonde;
Fig. 4: eine alternative Ausgestaltung der magnetisch-induktiven Durchflussmesssonde;
Fig. 5: eine erfindungsgemäße Messanordnung;
Fig. 6a: eine perspektivische Ansicht auf eine weitere Ausgestaltung der Hülsenöffnung und der Verbindungsvariante der Hülse mit dem Gehäusekörper;
Fig. 6b: einen Querschnitt durch den Vorsprung und die Hülsenöffnung; und
Fig. 7: eine alternative Ausgestaltung der Hülsenöffnung.

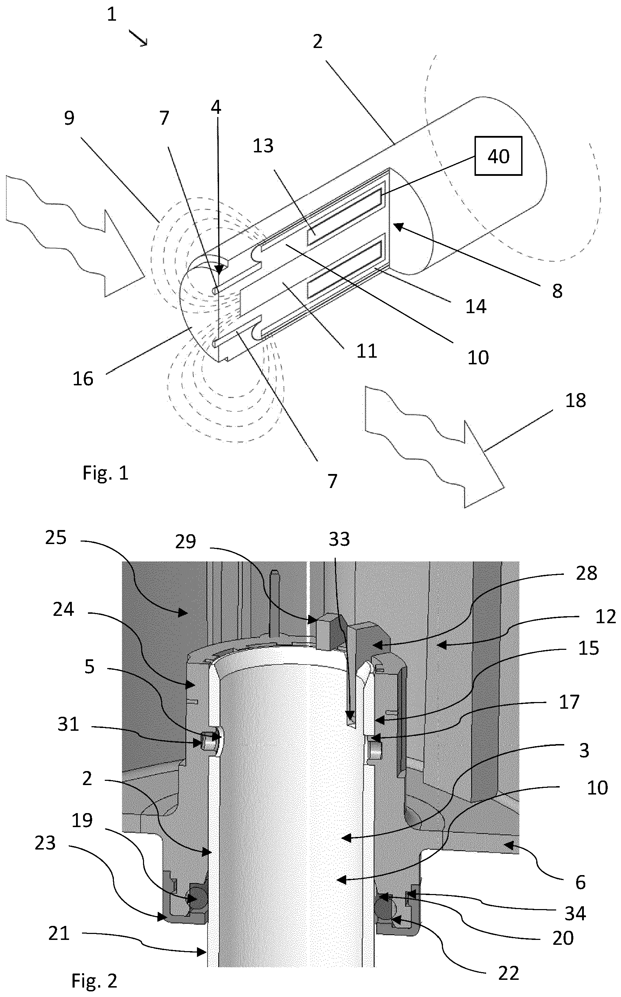

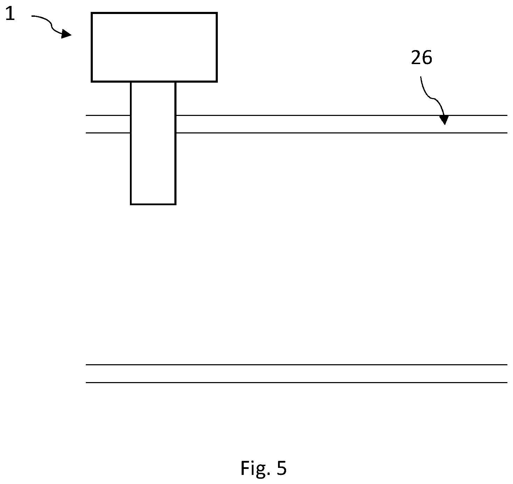

Anhand der perspektivischen und teilweise geschnittenen Darstellung der Fig. 1 wird zunächst das der Erfindung zugrunde liegende Messprinzip erläutert. Eine magnetisch-induktive Durchflussmesssonde 1 umfasst ein im Allgemeinen hohl- und kreiszylindrisches, einen vorgegebenen Außendurchmesser aufweisende, in der Regele metallische, Hülse 2. Diese ist an den Durchmesser einer Bohrung angepasst, die sich in einer Wand einer in Fig. 1 nicht, dagegen in Fig. 5 dargestellten Rohrleitung 26 befindet und in welche die magnetisch-induktive Durchflussmesssonde 1 fluiddicht eingesteckt ist.

In der Rohrleitung 26 strömt ein zu messendes fließfähiges Medium, in das die Durchflussmesssonde 1 praktisch senkrecht zur Strömungsrichtung des Mediums eintaucht, welches durch die gewellten Pfeile 18 angedeutet ist. Ein in das Medium ragender mediumsberührender zweiten Hülsenendabschnitt 16 der Hülse 2 ist mit einem Frontkörper 16 aus Isoliermaterial fluiddicht verschlossen. Mittels einer zumindest abschnittsweise in einem Hülseninneren 10 der Hülse 2 angeordneten magnetfelderzeugenden Vorrichtung 8 lässt sich ein durch den zweiten Hülsenendabschnitt 16 hindurch, in das Medium hineinreichendes Magnetfeld 9 erzeugen. Ein mindestens teilweise aus einem weichmagnetischen Material bestehender, in der Hülse 2 angeordneter Spulenkern 11 endet an oder in der Nähe des zweiten Hülsenendabschnittes 16. Eine Feldrückführung mit einem Feldrückführungskörper 14, der eine Spule 13 und den Spulenkern 11 zumindest abschnittsweise umschließt, ist dazu eingerichtet das aus dem zweiten Hülsenendabschnitt 16 hindurchreichende Magnetfeld 9 in die Hülse 2 zurück zum Spulenkern 11 zuführen. Zwei galvanische Messelektroden 7 sind in dem Frontkörper 16 angeordnet und berühren das Medium. An den Messelektroden 7 lässt sich eine aufgrund des Faraday'schen Induktionsgesetzes induzierte elektrische Spannung mittels einer Messschaltung abgreifen. Diese ist maximal, wenn die magnetisch-induktive Durchflussmesssonde 1 so in die Rohrleitung eingebaut ist, dass eine durch eine die beiden Messelektroden 7 schneidende Gerade und eine Längsachse der magnetisch-induktiven Durchflussmesssonde 1 aufgespannte Ebene senkrecht zu der Strömungsrichtung 18 bzw. Längsachse der Rohrleitung verläuft. Es können auch mehr als zwei Messelektroden 7 vorgesehen sein. Derartige Varianten werden beispielsweise für eine genauere Leitfähigkeitsmessung oder für eine Strömungsrichtungserkennung eingesetzt. Eine Betriebsschaltung 40 ist mit der Spule 13 elektrisch verbunden und dazu eingerichtet ein getaktetes Anregungssignal auf die Spule 13 aufzuprägen, um somit ein getaktetes Magnetfeld 9 zu erzeugen.

Fig. 2 zeigt eine geschnittene Darstellung durch den Verbindungsteil des Gehäuses 12 mit der Hülse 2. Die erfindungsgemäße magnetisch-induktive Durchflussmesssonde 1 zum Einsetzen in eine Öffnung eines von einem fließfähigen Medium durchströmten Behältnisses und zum Ermitteln einer strömungsgeschwindigkeitsabhängigen Messgröße eines fließfähigen Mediums, umfasst eine metallische Hülse 2 mit einen ersten Hülsenendabschnitt 3 und einen mediumsberührenden zweiten Hülsenendabschnitt (4, siehe Fig. 1). Ein wesentliches Merkmal der Erfindung ist die im ersten Hülsenendabschnitt 3 in einer Hülsenwandung 6 eingearbeitete Hülsenöffnung 5. Die abgebildete Ausgestaltung weist zwei gegenüberliegende Hülsenöffnungen auf, die jeweils einen runden Querschnitt aufweisen und als Bohrung ausgebildet sind. Die Form der Hülsenöffnung 5 kann jedoch frei gewählt werden.

Weiterhin umfasst die magnetisch-induktive Durchflussmesssonde 1 ein Gehäuse 12 zum Unterbringen von Elektronikkomponenten. Elektronikkomponenten sind wesentlicher Bestandteil von elektrischen Schaltungen und können in der Regel eine Spannungsquelle, elektrische Widerstände, Kondensatoren, Spulen, Dioden, Transistoren und integrierte Schaltungen umfassen. Man unterscheidet zwischen aktive und passive, lineare und nichtlineare, diskrete und integrierte, und analoge und digitale Elektronikkomponenten. Die Elektronikkomponenten sind Teil der Betriebsschaltung, Messschaltung und/oder Auswerteschaltung. Weiterhin können die Elektronikkomponenten Teil eines Displays sein. Die Elektronikkomponenten können auf einer Leiterplatte angeordnet sein. Das Gehäuse 12 weist einen zumindest teilweise aus thermoplastischen Kunststoff gebildeten Gehäusekörper 6 auf mit einer Gehäusekörperöffnung 15, in die sich der erste Hülsenendabschnitt 3 erstreckt. Ein geeignetes Material für den Gehäusekörper 6 ist Polycarbonat. Zudem weist der Gehäusekörper 6 mindestens einen Vorsprung 17 auf, der sich, insbesondere radial, in Richtung des Hülseninneren 10 und in die mindestens eine Hülsenöffnung 5 erstreckt zum Bilden einer formschlüssigen Verbindung zwischen der Hülse 2 und dem Gehäusekörper 6. In der abgebildeten Ausgestaltung weist der Gehäusekörper 6 genau zwei gegenüberliegende Vorsprünge auf, die beide mittels Heißverstemmen gebildet sind. Dabei umfasst das Bilden der Vorsprunge 17 mittels Heißverstemmen das Ausprägen einer Vertiefung 31, die als Sackloch ausgebildet ist, in eine der Außenwandung 21 der Hülse 2 zugewandten Fläche 30 des Kragens 24. Die Vorsprünge 17 sind daher zumindest abschnittsweise hohlzylindrisch ausgebildet.

Das Gehäuse 12 weist weiterhin ein Dichtmittel, insbesondere einen Dichtring 19, auf, welcher in einer Dichtmittelaufnahme 20 des Gehäusekörpers 6 angeordnet und zwischen einer Außenwandung 21 der Hülse 2 und einer Gegendruckfläche 22 des Gehäusekörpers 6 eingepresst ist. Eine Gehäusekappe 23 ist dazu eingerichtet, das Dichtmittel, insbesondere den Dichtring 19, in Position zu halten. Dabei begrenzt die Gehäusekappe 23 die Dichtmittelaufnahme 20 in einer Längsrichtung der Hülse 2. Die Gehäusekappe 23 weist zudem eine Vorrichtung zum Einrasten der Gehäusekappe in eine vorgesehene Aufnahme 34 im Gehäusekörper 6. Die Vorrichtung zum Einrasten der Gehäusekappe kann als ringförmige Rastnase ausgebildet sein, die in eine ringförmige Aufnahme 34 bzw. Vertiefung im Gehäusekörper 6 greift oder als einzelne Segmente zum Einrasten in einzeln vorgesehene Aufnahmen. Dies sorgt dafür, dass die Gehäusekappe 23 zumindest formschlüssig mit dem Gehäusekörper 6 verbunden ist.

Weiterhin weist das Gehäuse 12 ein Gehäuseinneres 25 auf, in das sich ein Kragen 24 des Gehäusekörper 6 erstreckt. Der Vorteil der Lösung ist eine besondere Kompaktheit des Gehäuses 12. Alternativ kann der Kragen auch außerhalb des Gehäuseinneren 25 vorgesehen sein. Der Kragen 24 ist zumindest abschnittsweise hohlzylindrisch bzw. ringförmig ausgebildet. Der Kragen 24 dient dazu, die Kontaktfläche zwischen Hülse und Gehäusekörper zu erhöhen, um somit eine mechanisch stabilere Verbindung zwischen Hülse 2 und Gehäusekörper 6 zu erreichen. Dabei weist der Kragen 24 den mindestens einen Vorsprung 17 auf, zum Bilden der formschlüssigen Verbindung zwischen Kragen 24 und Hülse 2.

Der Gehäusekörper 6, insbesondere der Kragen 24 weist zudem einen in das Hülseninnere hervorkragenden Anschlagskörper 28 auf, welcher sich in einer, insbesondere als Schlitz 33 ausgebildete, Aufnahme befindet. Der Anschlagskörper 28 ist dazu eingerichtet, Scherkräfte auf den mindestens einen Vorsprung 17 zu verringern, welche zumindest durch ein Drehmoment auf den Gehäusekörper 6 verursacht werden.

Gemäß einer vorteilhaften Ausgestaltung weist die Hülse mehr als zwei Hülsenöffnungen auf, insbesondere drei und bevorzugt vier Hülsenöffnungen, über die jeweils eine formschlüssige Verbindung zwischen Hülse 2 und Gehäusekörper 6 erzeugt werden. Die Hülsenöffnungen sind derart in der Hülse 2 angeordnet, dass sie um einen Winkel größer gleich 60° versetzt positioniert sind.

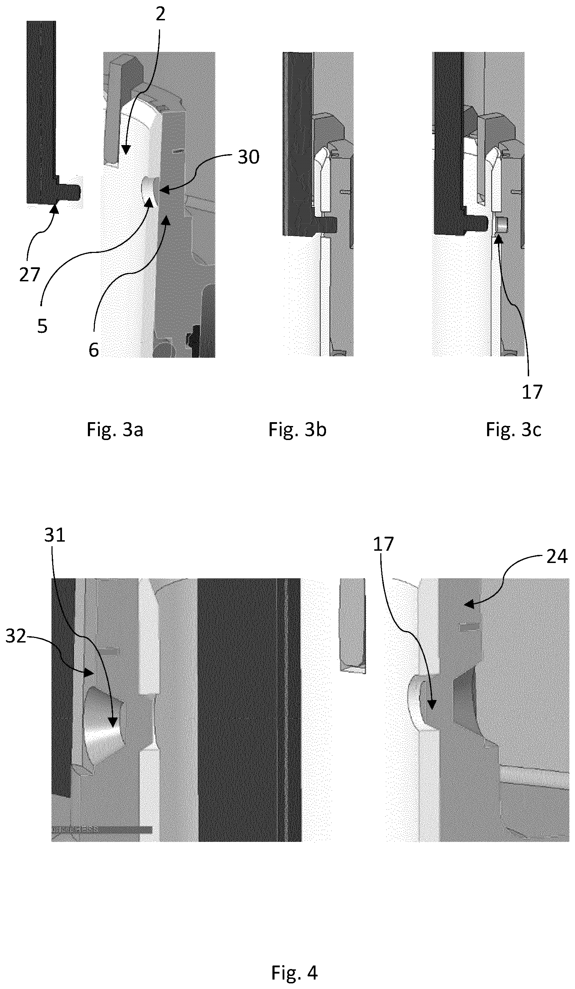

Fig. 3a-c zeigen drei Stufen eines Verfahrens zur Herstellung der erfindungsgemäßen magnetisch-induktiven Durchflussmesssonde. In einem ersten Verfahrensschritt wird ein Stempel 27 zum Heißverstemmen in das Hülseninnere eingeführt. Der Stempel 27 weist eine beheizbare Spitze auf, die in der abgebildeten Ausgestaltung zylindrisch ausgebildet ist. Alternativ kann die Spitze eine wannenförmige Gestalt annehmen. Der Stempel 27 wird entweder vor oder während der Berührung mit dem Gehäusekörper 6 erhitzt. Wenn der Stempel 27 auf Solltemperatur aufgeheizt ist, wird er - im zweiten Verfahrensschritt - durch die Hülsenöffnung 5 hindurchgeführt und gegen die der Hülse 2 zugewandten Fläche 30 des Kragens gedrückt. Alternativ wird der Stempel 27 gegen eine Führung, die sich in der Hülsenöffnung 5 erstreckt gepresst. Beim Andrücken des Stempels gegen die Fläche 30 in einer radialen Richtung wird das geschmolzene Material des Gehäusekörpers 6, ebenfalls radial verdrängt und der Stempel formt eine Vertiefung im Gehäusekörper 6. Dabei bildet sich auch der Vorsprung 17 aus dem geschmolzenen und verdrängten Material aus, der für die formschlüssige Verbindung zwischen Gehäusekörper 6 und Hülse 2 sorgt. Im letzten Verfahrensschritt wird der Stempel 27 entfernt. Dabei kann der Stempel 27 mit einem Kanal versehen sein, über den Luft in den Kontaktbereich eingelassen wird zum beschleunigten Abkühlen der Spitze und des geschmolzenen Materials. Zurück bleibt eine sacklochförmige Vertiefung im Gehäusekörper 6.

Gemäß einer vorteilhaften Ausgestaltung werden in einem ersten Durchgang zwei Vorsprünge 17 mit zwei Stempel erzeugt und in einem zweiten Durchgang nach Drehen der Hülse 2 und Abkühlen des zuvor geschmolzenen Materials des Gehäusekörpers 6 zwei weitere Vorsprünge 17 durch die beiden vorherigen Stempel erzeugt.

Fig. 4 zeigt eine alternative Ausgestaltung der magnetisch-induktiven Durchflussmesssonde in der der Vorsprung 17 durch das Ausprägen der, in der beispielhaften Abbildung konisch ausgebildeten Vertiefung 31 in eine dem Gehäuseinneren 25 zugeneigten Fläche 32 des Kragens 24 ausgebildet ist. In dem Herstellungsverfahren wird das Material des Gehäusekörpers aufgeweicht bzw. geschmolzen und vom Gehäuseinneren 25 aus in oder gegebenenfalls auch durch die Hülsenöffnung gedrückt. Der sich daraus ausgebildete Vorsprung 17 sorgt für die formschlüssige Verbindung.

Fig. 5 zeigt eine erfindungsgemäße Messanordnung in einer Prozessanlage, die eine Rohrleitung 26 zum Führen eines Mediums umfasst. Die Rohrleitung weist eine Öffnung auf, die seitlich in einer Mantelfläche eingearbeitet ist. In der Öffnung ist eine erfindungsgemäße magnetisch-induktive Durchflussmesssonde 1 angeordnet und dazu eingerichtet eine strömungsgeschwindigkeitsabhängige Messgröße zu ermitteln und zu überwachen.

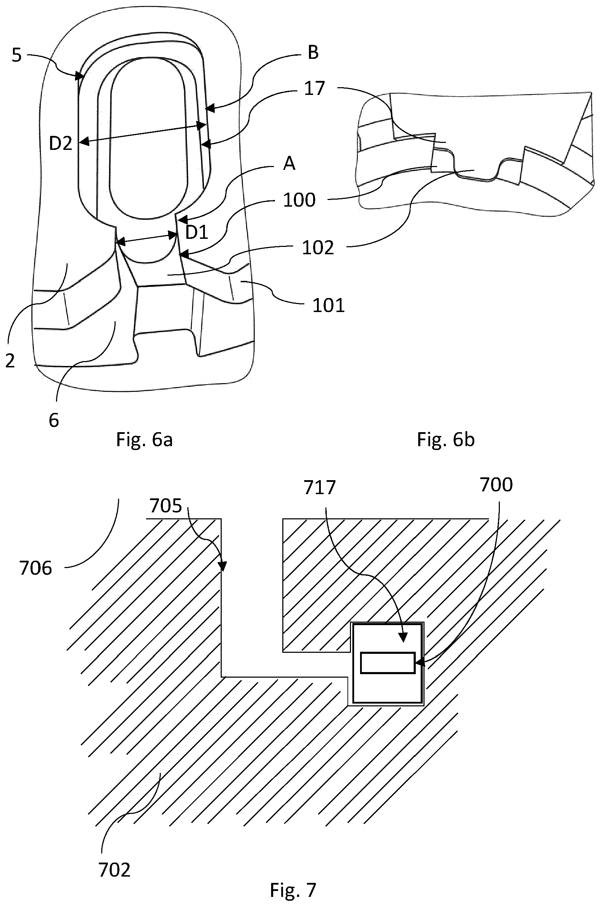

Fig. 6a zeigt eine perspektivische Ansicht auf eine weitere Ausgestaltung der Hülsenöffnung 5 und der Verbindungsvariante der Hülse 2 mit dem Gehäusekörper 6. Die abgebildete Hülsenöffnung 5 ist zumindest abschnittsweise als Schlitz 100 ausgebildet, der sich von einem Hülsenrand 101 der Hülse in Hülsen-Längsrichtung erstreckt. Die Ausgestaltung als Schlitz hat den Vorteil, dass sich daran eine Hervorkragung bzw. eine Führung des Gehäusekörpers entlang führen lässt. Die abgebildete Hülsenöffnung 5 weist eine Schlüsselform auf. Dafür weist der Schlitz 100 in einem ersten Schlitz-Abschnitt A einen ersten Schlitz-Durchmesser D1 und in einem zweiten Schlitz-Abschnitt B einen zweiten Schlitz-Durchmesser D2 auf. Der Durchmesser des Schlitzes 100 kann stufenförmig oder kontinuierlich zunehmen. Beide Durchmesser unterscheiden sich derart, dass der erste Schlitz-Durchmesser D1 kleiner ist als der zweite Schlitz-Durchmesser D2.

In der abgebildeten Ausgestaltung weist der Hülsenrand 101 eine schräge Phase auf zur vereinfachten Einführung eines Teilabschnittes bzw. einer Führung 102 des Gehäusekörpers 6. Weiterhin ist die Hülsenöffnung im zweiten Schlitz-Abschnitt oval ausgebildet.

Der Gehäusekörper weist eine Führung 102 auf, die sich zumindest abschnittsweise entlang des Schlitzes 100, insbesondere entlang des ersten Schlitz-Abschnittes A erstreckt zur Aufnahme eines auf den Gehäusekörper 6 wirkenden Drehmoments. Beim Verbinden der Hülse 2 mit dem Gehäusekörper 6 wird die Führung 102 derart durch den Schlitz 100 geführt, dass sich die Führung 102 zumindest teilweise im ersten Schlitz-Abschnitt A und im zweiten Schlitz-Abschnitt B erstreckt. Mit einer beheizbaren Spitze, die im Wesentlichen Wannenförmig ausgebildet ist, wird das Material der Führung 102 geschmolzen und verformt. Nach dem Verformen lässt sich der Gehäusekörper 6 nicht mehr von der Hülse 2 lösen ohne die formschlüssige Verbindung, insbesondere den Vorsprung 17 zu zerstören.

Fig. 6b zeigt einen Querschnitt durch den Vorsprung 17 und die Hülsenöffnung 5. Der Vorsprung 17 schmiegt sich an den Rand der Hülse in der Hülsenöffnung 5 an. Dies dient dazu, um die Rotationskräfte auf den Gehäusekörper aufzunehmen, ohne dass dabei Spiel bei der Rotation des Gehäusekörpers entsteht. Damit lässt sich der Gehäusekörper nicht mehr von der Hülse 2 trennen, d.h. abziehen, ohne dass der Vorsprung 17 zerstört wird. Der Vorsprung 17 ist aus dem Material der Führung 102 gebildet. Die dazu verwendete Spitze hat die Form einer Wanne. Damit wird das Material der Führung 100 in Richtung des Randes der Hülsenöffnung 5 verdrängt.

Fig. 7 zeigt eine alternative Ausgestaltung der Hülsenöffnung 705 die Teil einer Bajonettverbindung ist. Die Hülsenöffnung 705 ist in einem Randbereich als (Längs-)Schlitz ausgebildet, der sich in Längsrichtung der Hülse 702 erstreckt. Am Ende der Erstreckung ist die Hülsenöffnung 705 als Schlitz ausgebildet, der sich in Umfangsrichtung erstreckt. In einem Endbereich weist der Schlitz eine Verbreiterung auf, ähnlich wie die Ausgestaltung in Fig. 6a. Der Gehäusekörper 706 weist eine Führung 700 auf, die dergestalt ist, dass sie durch die Hülsenöffnung 705 in den Endbereich bzw. die Verbreiterung führbar ist. Dort ist die Führung 700 derart verformt, dass sich ein Vorsprung 717 bildet, welcher die formschlüssige Verbindung zwischen Hülse 702 und Gehäusekörper 706 bildet. Nach dem Verschmelzen bzw. verformen der Führung 700 ist diese nicht mehr durch die Führung 700 führbar, da der Vorsprung 717 die Beweglichkeit des Gehäusekörpers 706 blockiert.

## Patentansprüche

1. Magnetisch-induktive Durchflussmesssonde (1) zum Einsetzen in eine Öffnung eines von einem fließfähigen Medium durchströmten Behältnisses und zum Ermitteln einer strömungsgeschwindigkeitsabhängigen Messgröße eines fließfähigen Mediums, umfassend:
- eine metallische Hülse (2) mit einen ersten Hülsenendabschnitt (3) und einen mediumsberührenden zweiten Hülsenendabschnitt (4);
- mindestens zwei Messelektroden (7) zum Bilden eines galvanischen Kontaktes mit dem Medium und zum Abgreifen einer induzierten Spannung im fließenden Medium,
wobei mindestens eine der mindestens zwei Messelektroden (7) im zweiten Hülsenendabschnitt (4) angeordnet ist; und
- eine magnetfelderzeugende Vorrichtung (8) zum Erzeugen eines zumindest den zweiten Hülsenendabschnitt (4) durchdringenden Magnetfeldes (9),
wobei die magnetfelderzeugende Vorrichtung (8) zumindest abschnittsweise in einem Hülseninneren (10) angeordnet ist,
**dadurch gekennzeichnet, dass** die Hülse (2) im ersten Hülsenendabschnitt (3) mindestens eine Hülsenöffnung (5) in einer Hülsenwandung (6) aufweist,
wobei die magnetisch-induktive Durchflussmesssonde (1) ein Gehäuse (12) zum Unterbringen von Elektronikkomponenten umfasst,
wobei das Gehäuse (12) einen zumindest teilweise aus thermoplastischen Kunststoff gebildeten Gehäusekörper (6) aufweist,
wobei der Gehäusekörper (6) eine Gehäusekörperöffnung (15) aufweist, in die sich der erste Hülsenendabschnitt (3) erstreckt,
wobei der Gehäusekörper (6) mindestens einen Vorsprung (17) aufweist, der sich, insbesondere radial, in Richtung des Hülseninneren (10) und in die mindestens eine Hülsenöffnung (5) erstreckt zum Bilden einer formschlüssigen Verbindung zwischen der Hülse (2) und dem Gehäusekörper (6).

2. Magnetisch-induktive Durchflussmesssonde (1) nach Anspruch 1,
wobei das Gehäuse (12) ein Dichtmittel, insbesondere einen Dichtring (19), umfasst,
wobei das Dichtmittel, insbesondere der Dichtring (19), in einer Dichtmittelaufnahme (20) des Gehäusekörpers (6) angeordnet und zwischen einer Außenwandung (21) der Hülse (2) und einer Gegendruckfläche (22) des Gehäusekörpers (6) eingepresst ist.

3. Magnetisch-induktive Durchflussmesssonde (11) nach Anspruch 2,
wobei das Gehäuse (12) eine Gehäusekappe (23) umfasst, die dazu eingerichtet ist, das Dichtmittel, insbesondere den Dichtring (19), in Position zu halten,
wobei die Gehäusekappe (23) die Dichtmittelaufnahme (20) in einer Längsrichtung der Hülse (2) begrenzt.

4. Magnetisch-induktive Durchflussmesssonde (1) nach Anspruch 3,
wobei die Gehäusekappe (23) zumindest formschlüssig mit dem Gehäusekörper (6) verbunden ist.

5. Magnetisch-induktive Durchflussmesssonde (1) nach mindestens einem der vorhergehenden Ansprüche,
wobei das Gehäuse (12) ein Gehäuseinneres (25) aufweist,
wobei der Gehäusekörper (6) einen Kragen (24) aufweist, der sich zumindest abschnittsweise in das Gehäuseinnere (25) erstreckt,
wobei der Kragen (24) den mindestens einen Vorsprung (17) umfasst.

6. Magnetisch-induktive Durchflussmesssonde (1) nach mindestens einem der vorhergehenden Ansprüche,
wobei der Vorsprung (17) durch das Ausprägen einer Vertiefung (31) in eine dem Gehäuseinneren (25) zugeneigten Fläche (32) des Kragens (24) ausgebildet ist.

7. Magnetisch-induktive Durchflussmesssonde (1) nach mindestens einem der Ansprüche 1 bis 5,
wobei der Vorsprung (17) durch das Ausprägen einer Vertiefung (31) in eine der Außenwandung (21) der Hülse (2) zugewandten Fläche (30) des Kragens (24) ausgebildet ist.

8. Magnetisch-induktive Durchflussmesssonde (1) nach mindestens einem der vorhergehenden Ansprüche,
wobei der Gehäusekörper (6), insbesondere der Kragen (24) einen hervorkragenden Anschlagskörper (28) aufweist
wobei die Hülse (2) eine, insbesondere als Schlitz (33) ausgebildete, Aufnahme für den Anschlagskörper (28) aufweist,
wobei der Anschlagskörper (28) in der Aufnahme, insbesondere im Schlitz (33), angeordnet ist,
wobei der Anschlagskörper (28) dazu eingerichtet ist, Scherkräfte auf den mindestens einen Vorsprung (17) zu verringern, welche zumindest durch ein Drehmoment auf den Gehäusekörper (6) verursacht sind.

9. Magnetisch-induktive Durchflussmesssonde (1) nach mindestens einem der vorhergehenden Ansprüche,
wobei die mindestens eine Hülsenöffnung (5) zumindest abschnittsweise als Schlitz (100) ausgebildet ist.

10. Magnetisch-induktive Durchflussmesssonde (1) nach Anspruch 9,
wobei der Schlitz (100) in einem ersten Schlitz-Abschnitt A einen ersten Schlitz-Durchmesser D1 annimmt,
wobei der Schlitz in einem zweiten Schlitz-Abschnitt B einen zweiten Schlitz-Durchmesser D2 annimmt,
wobei der erste Schlitz-Durchmesser D1 kleiner ist als der zweite Schlitz-Durchmesser D2.

11. Magnetisch-induktive Durchflussmesssonde (1) nach Anspruch 9 oder 10,
wobei sich der Schlitz (100) von einem Hülsenrand (101) der Hülse (2) in Hülsen-Längsrichtung erstreckt,
wobei der Hülsenrand (101) eine schräge Phase aufweist zur vereinfachten Einführung eines Teilabschnittes des Gehäusekörpers (6).

12. Magnetisch-induktive Durchflussmesssonde (1) nach mindestens einem der vorhergehenden Ansprüche,
wobei die mindestens eine Hülsenöffnung (5) zumindest abschnittsweise oval ausgebildet ist.

13. Magnetisch-induktive Durchflussmesssonde (1) nach mindestens einem der Ansprüche 9 bis 12,
wobei der Gehäusekörper (6) eine Führung (102) aufweist, die sich zumindest abschnittsweise entlang des Schlitzes (100) erstreckt zur Aufnahme eines auf den Gehäusekörper (6) wirkenden Drehmoments.

## Claims

1. A magneto-inductive flow measuring probe (1) for insertion into an opening of a container through which a flowable medium flows and for determining a flow-velocity-dependent measured variable of a flowable medium, comprising:
- a metallic sleeve (2) having a first sleeve end section (3) and a second sleeve end section (4) contacting the medium;
- at least two measuring electrodes (7) for forming a galvanic contact with the medium and for tapping off an induced voltage in the flowing medium,
wherein at least one of the at least two measuring electrodes (7) is arranged in the second sleeve end section (4); and
- a magnetic field generating device (8) for generating a magnetic field (9) penetrating at least the second sleeve end section (4),
wherein the magnetic field generating device (8) is arranged at least in sections in a sleeve interior (10),
**characterized in that** the sleeve (2) has at least one sleeve opening (5) in a sleeve wall (6) in the first sleeve end section (3),
wherein the magneto-inductive flow measuring probe (1) comprises a housing (12) for accommodating electronic components,
wherein the housing (12) has a housing body (6) formed at least partially from a thermoplastic material,
wherein the housing body (6) has a housing body opening (15) into which the first sleeve end section (3) extends,
wherein the housing body (6) has at least one projection (17) extending, in particular radially, toward the sleeve interior (10) and into the at least one sleeve opening (5) so as to form a form-locking connection between the sleeve (2) and the housing body (6).

2. The magneto-inductive flow measuring probe (1) according to claim 1,
wherein the housing (12) comprises a sealing means, in particular a sealing ring (19),
wherein the sealing means, in particular the sealing ring (19), is arranged in a sealing means receptacle (20) of the housing body (6) and is pressed in between an outer wall (21) of the sleeve (2) and a counter-pressure surface (22) of the housing body (6).

3. The magneto-inductive flow measuring probe (1) according to claim 2,
wherein the housing (12) comprises a housing cap (23) configured to hold the sealing means, in particular the sealing ring (19), in position,
wherein the housing cap (23) delimits the sealing means receptacle (20) in a longitudinal direction of the sleeve (2).

4. The magneto-inductive flow measuring probe (1) according to claim 3,
wherein the housing cap (23) is connected to the housing body (6) at least in a form-locking manner.

5. The magneto-inductive flow measuring probe (1) according to at least one of the preceding claims,
wherein the housing (12) has a housing interior (25),
wherein the housing body (6) has a collar (24) extending at least in sections into the housing interior (25),
wherein the collar (24) comprises the at least one projection (17).

6. The magneto-inductive flow measuring probe (1) according to at least one of the preceding claims,
wherein the projection (17) is formed by embossing a recess (31) into a surface (32) of the collar (24) facing the housing interior (25).

7. The magneto-inductive flow measuring probe (1) according to at least one of claims 1 to 5, wherein the projection (17) is formed by embossing a recess (31) into a surface (30) of the collar (24) facing the outer wall (21) of the sleeve (2).

8. The magneto-inductive flow measuring probe (1) according to at least one of the preceding claims,
wherein the housing body (6), in particular the collar (24), has a protruding stop body (28),
wherein the sleeve (2) has a receptacle for the stop body (28), in particular designed as a slot (33),
wherein the stop body (28) is arranged in the receptacle, in particular in the slot (33),
wherein the stop body (28) is configured to reduce shear forces acting on the at least one projection (17), which are caused at least by a torque acting on the housing body (6).

9. The magneto-inductive flow measuring probe (1) according to at least one of the preceding claims,
wherein the at least one sleeve opening (5) is formed at least in sections as a slot (100).

10. The magneto-inductive flow measuring probe (1) according to claim 9,
wherein the slot (100) has a first slot diameter D1 in a first slot section A,
wherein the slot has a second slot diameter D2 in a second slot section B,
wherein the first slot diameter D1 is smaller than the second slot diameter D2.

11. The magneto-inductive flow measuring probe (1) according to claim 9 or 10,
wherein the slot (100) extends from a sleeve rim (101) of the sleeve (2) in a sleeve longitudinal direction,
wherein the sleeve rim (101) has an inclined chamfer for facilitating insertion of a portion of the housing body (6).

12. The magneto-inductive flow measuring probe (1) according to at least one of the preceding claims,
wherein the at least one sleeve opening (5) is formed at least in sections as an oval.

13. The magneto-inductive flow measuring probe (1) according to at least one of claims 9 to 12, wherein the housing body (6) has a guide (102) extending at least in sections along the slot (100) for absorbing a torque acting on the housing body (6).

## Revendications

1. Sonde de mesure de débit magnéto-inductive (1) destinée à être insérée dans une ouverture d'un récipient traversé par un fluide et à déterminer une grandeur de mesure dépendant de la vitesse d'écoulement d'un fluide, comprenant :
- un manchon métallique (2) comportant une première section d'extrémité de manchon (3) et une seconde section d'extrémité de manchon (4) en contact avec le fluide ;
- au moins deux électrodes de mesure (7) destinées à établir un contact galvanique avec le fluide et à capter une tension induite dans le fluide en écoulement,
au moins l'une des au moins deux électrodes de mesure (7) étant disposée dans la seconde section d'extrémité de manchon (4) ; et
- un dispositif de génération de champ magnétique (8) destiné à générer un champ magnétique (9) traversant au moins la seconde section d'extrémité de manchon (4),
le dispositif de génération de champ magnétique (8) étant disposé au moins par sections à l'intérieur du manchon (10),
**caractérisée en ce que** le manchon (2) présente, dans la première section d'extrémité de manchon (3), au moins une ouverture de manchon (5) dans une paroi de manchon (6),
la sonde de mesure de débit magnéto-inductive (1) comprenant un boîtier (12) destiné à loger des composants électroniques,
le boîtier (12) comprenant un corps de boîtier (6) formé au moins partiellement en matière plastique thermoplastique,
le corps de boîtier (6) présentant une ouverture de corps de boîtier (15) dans laquelle s'étend la première section d'extrémité de manchon (3),
le corps de boîtier (6) comprenant au moins un élément en saillie (17) s'étendant, en particulier radialement, en direction de l'intérieur du manchon (10) et dans la au moins une ouverture de manchon (5) afin de former une liaison par complémentarité de forme entre le manchon (2) et le corps de boîtier (6).

2. Sonde de mesure de débit magnéto-inductive (1) selon la revendication 1,
le boîtier (12) comprenant un moyen d'étanchéité, en particulier un joint d'étanchéité (19),
le moyen d'étanchéité, en particulier le joint d'étanchéité (19), étant disposé dans un logement de moyen d'étanchéité (20) du corps de boîtier (6) et étant comprimé entre une paroi extérieure (21) du manchon (2) et une surface de contre-pression (22) du corps de boîtier (6).

3. Sonde de mesure de débit magnéto-inductive (1) selon la revendication 2,
le boîtier (12) comprenant un capot de boîtier (23) configuré pour maintenir en position le moyen d'étanchéité, en particulier le joint d'étanchéité (19),
le capot de boîtier (23) délimitant le logement du moyen d'étanchéité (20) dans une direction longitudinale du manchon (2).

4. Sonde de mesure de débit magnéto-inductive (1) selon la revendication 3,
le capot de boîtier (23) étant relié au corps de boîtier (6) au moins par complémentarité de forme.

5. Sonde de mesure de débit magnéto-inductive (1) selon au moins l'une des revendications précédentes,
le boîtier (12) présentant un intérieur de boîtier (25),
le corps de boîtier (6) comprenant une collerette (24) s'étendant au moins par sections dans l'intérieur de boîtier (25),
la collerette (24) comprenant le au moins un élément en saillie (17).

6. Sonde de mesure de débit magnéto-inductive (1) selon au moins l'une des revendications précédentes,
l'élément en saillie (17) étant formé par l'emboutissage d'un évidement (31) dans une surface (32) de la collerette (24) orientée vers l'intérieur de boîtier (25).

7. Sonde de mesure de débit magnéto-inductive (1) selon au moins l'une des revendications 1 à 5,
l'élément en saillie (17) étant formé par l'emboutissage d'un évidement (31) dans une surface (30) de la collerette (24) orientée vers la paroi extérieure (21) du manchon (2).

8. Sonde de mesure de débit magnéto-inductive (1) selon au moins l'une des revendications précédentes,
le corps de boîtier (6), en particulier la collerette (24), présentant un élément de butée saillant (28),
le manchon (2) présentant un logement pour l'élément de butée (28), en particulier formé sous forme de fente (33),
l'élément de butée (28) étant disposé dans le logement, en particulier dans la fente (33), l'élément de butée (28) étant configuré pour réduire des forces de cisaillement agissant sur le au moins un élément en saillie (17), lesquelles sont au moins causées par un couple appliqué au corps de boîtier (6).

9. Sonde de mesure de débit magnéto-inductive (1) selon au moins l'une des revendications précédentes,
la au moins une ouverture de manchon (5) étant formée au moins par sections sous forme de fente (100).

10. Sonde de mesure de débit magnéto-inductive (1) selon la revendication 9,
la fente (100) présentant un premier diamètre de fente D1 dans une première section de fente A, la fente présentant un second diamètre de fente D2 dans une seconde section de fente B,
le premier diamètre de fente D1 étant inférieur au second diamètre de fente D2.

11. Sonde de mesure de débit magnéto-inductive (1) selon la revendication 9 ou 10,
la fente (100) s'étendant, à partir d'un bord de manchon (101) du manchon (2), dans une direction longitudinale du manchon,
le bord de manchon (101) présentant un chanfrein incliné afin de faciliter l'introduction d'une partie du corps de boîtier (6).

12. Sonde de mesure de débit magnéto-inductive (1) selon au moins l'une des revendications précédentes,
la au moins une ouverture de manchon (5) étant formée au moins par sections sous une forme ovale.

13. Sonde de mesure de débit magnéto-inductive (1) selon au moins l'une des revendications 9 à 12,
le corps de boîtier (6) présentant un guidage (102) s'étendant au moins par sections le long de la fente (100) afin d'absorber un couple agissant sur le corps de boîtier (6).
